# EUROPÄISCHE PATENTSCHRIFT

(11) **EP 3 807 796 B1**
(45) Veröffentlichungstag und Bekanntmachung des Hinweises auf die Patenterteilung: **01.06.2022**
(21) Anmeldenummer: 19739935.5
(22) Anmeldetag: 02.07.2019
(51) Int. Cl.: G06F 21/52, G06F 11/16, G06F 11/30, G06F 21/56, G06F 21/74

(54) **VERFAHREN ZUM BETREIBEN EINER RECHENANLAGE**
METHOD FOR OPERATING A COMPUTER SYSTEM
PROCÉDÉ DE FONCTIONNEMENT D'UN SYSTÈME INFORMATIQUE

(30) Priorität: 30.07.2018 DE 102018212686
(43) Veröffentlichungstag der Anmeldung: 21.04.2021
(73) Patentinhaber: Siemens Mobility GmbH, 81739 München (DE)
(72) Erfinder: SCHWEISSTHAL, Hans-Helmut, 38304 Wolfenbüttel (DE); STEINBACH, Jan Philipp, 38124 Braunschweig (DE)
(86) Internationale Anmeldenummer: PCT/EP2019/067653
(87) Internationale Veröffentlichungsnummer: WO 2020/025237

(56) Entgegenhaltungen:
- WO-A1-2018/033344
- DE-A1-102012 011 584
- US-A1- 2008 184 258
- US-B1- 6 604 177

## Beschreibung

Die Erfindung bezieht sich auf ein Verfahren zum Betreiben einer Rechenanlage, die zumindest zwei parallel betriebene Prozessoren aufweist.

Rechenanlagen mit parallel betriebenen Prozessoren finden insbesondere zur Steuerung und Überwachung solcher technischen Anlagen ihren Einsatz, bei denen ein besonders sicherer Anlagenbetrieb gewährleistet werden muss, wie dies beispielsweise im Eisenbahnbereich der Fall ist. Für den Eisenbahnbereich sind hier beispielsweise die Normen EN50128 und EN50129 als relevant zu nennen.

Dokument US 2008 184258 A1 beschreibt, wie mehrere Betriebssysteme auf einem Mehrkernsystem betrieben werden. Ein nicht autorisierter Funktionsaufruf und ein nicht autorisierter Datenzugriff zwischen den Betriebssystemen werden erkannt. Die Zugriffsberechtigung wird auf zwei Ebenen geprüft. Auf der oberen Ebene wird eine Datenbank bereitgestellt, die von mehreren Betriebssystemen verwaltet wird. Die Datenbank beschreibt, welche Prozedur, Funktion, Aufgabe oder dergleichen zum Aufrufen einer Funktion verwendet werden kann. Auf der unteren Ebene wird die Zugriffsberechtigung für den Zugriff auf einen Speicher, die schließlich beim Konvertieren der Aufrufverarbeitung erreicht wird, von einem Zugriffsberechtigungsverwaltungsmodul unter Verwendung von Hardware überprüft.

Dokument DE 10 2012 011584 A1 beschreibt ein Verfahren zum Verwalten von Ressourcen eines Prozessorgeräts, das zum Steuern einer Automatisierungsinstallation konfiguriert ist. Das Verfahren umfasst das Verwenden von mindestens einem ersten Betriebssystem und mindestens einem zweiten Betriebssystem, das sich vorzugsweise vom ersten Betriebssystem unterscheidet. Das Prozessorgerät enthält mindestens zwei Prozessorkerne, die zum Betreiben der Betriebssysteme konfiguriert sind.

Der Erfindung liegt die Aufgabe zugrunde, ein Verfahren zum Betreiben einer Rechenanlage anzugeben, das sich besonders sicher durchführen lässt und dabei auch die Ausführung nichtsicherer Anwendungsprogramme ermöglicht.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass ein erster und zweiter Prozessor der Rechenanlage baugleich sind und jeweils zumindest zwei Prozessorkerne aufweisen und ein Prozessorkern des ersten Prozessors und ein Prozessorkern des zweiten Prozessors jeweils sicher betrieben werden, also auf der Basis eines sicheren Betriebssystems, das eine vorgegebene Sicherheitsstufe erreicht oder überschreitet, und jeweils mindestens ein Anwendungsprogramm sicher, also unter Erreichung der vorgegebenen Sicherheitsstufe, ausführen, wobei der genannte Prozessorkern des ersten Prozessors und der genannte Prozessorkern des zweiten Prozessors jeweils dasselbe Anwendungsprogramm oder dieselben Anwendungsprogramme sicher ausführen, wobei die übrigen Prozessorkerne des ersten Prozessors entweder abgeschaltet sind oder ebenfalls sicher betrieben werden, sei es auf der Basis des genannten sicheren Betriebssystems oder eines oder mehrerer anderer sicherer Betriebssysteme und unter sicherer Ausführung derselben Anwendungsprogramme und/oder anderer Anwendungsprogramme, wobei bei dem zweiten Prozessor mindestens ein Prozessorkern nichtsicher betrieben wird, also auf der Basis eines nichtsicheren Betriebssystems, das die vorgegebene Sicherheitsstufe nicht erreicht, und mindestens ein Anwendungsprogramm nichtsicher, also unter Unterschreitung der vorgegebenen Sicherheitsstufe, ausführt.

Ein wesentlicher Vorteil des erfindungsgemäßen Verfahrens besteht darin, dass Fehler, die von einem nichtsicher betriebenen Anwendungsprogramm erzeugt werden, in sehr einfacher Weise erkannt werden können. Da in dem ersten Prozessor nichtsichere Anwendungsprogramme schlicht nicht betrieben werden, können sie dort auch keine Fehler hervorrufen; Fehler nichtsicherer Anwendungsprogramme oder nichtsicherer Betriebssysteme können - im Falle von zwei Prozessoren - allenfalls in dem zweiten Prozessor auftreten und somit - beispielsweise durch einen Vergleich der Arbeitsweisen der zwei Prozessoren - in einfacher Weise detektiert werden. Entsprechendes gilt im Falle von mehr als zwei Prozessoren, da erfindungsgemäß zumindest der erste Prozessor ausschließlich sicher betrieben wird und somit stets ein Vergleich mit dessen Arbeitsweise möglich ist.

Als vorteilhaft wird es angesehen, wenn die Speicherinhalte der genannten zwei gleich betriebenen Prozessorkerne verglichen werden und auf eine fehlerhafte Rückwirkung des nichtsicher betriebenen Prozessorkerns des zweiten Prozessors auf den sicher betriebenen Prozessorkern des zweiten Prozessors geschlossen wird, wenn die Speicherinhalte ganz oder in Teilen, insbesondere mit Blick auf Betriebsdaten des sicheren Anwendungsprogramms, bei den beiden sicher betriebenen Prozessorkernen voneinander abweichen oder über ein vorgegebenes Maß hinaus voneinander abweichen.

Bei einer als besonders vorteilhaft angesehenen Variante ist vorgesehen, dass der erste Prozessor der Rechenanlage zumindest drei Prozessorkerne aufweist, von denen ein ausgewählter erster Prozessorkern mit einem sicheren Betriebssystem, also einem solchen, das eine vorgegebene Sicherheitsstufe erreicht oder überschreitet, betrieben wird und ein erstes Anwendungsprogramm sicher, also unter Erreichung der vorgegebenen Sicherheitsstufe, ausführt, ein ausgewählter zweiter Prozessorkern mit dem oder einem anderen sicheren Betriebssystem betrieben wird und ein zweites Anwendungsprogramm sicher ausführt, und ein ausgewählter dritter Prozessorkern abgeschaltet ist.

Der zweite Prozessor weist vorzugsweise ebenfalls zumindest drei Prozessorkerne auf, nachfolgend vierter, fünfter und sechster Prozessorkern genannt, von denen der vierte Prozessorkern mit demselben sicheren Betriebssystem wie der zweite Prozessorkern betrieben wird und das zweite Anwendungsprogramm sicher ausführt, der fünfte Prozessorkern mit demselben sicheren Betriebssystem wie der erste Prozessorkern betrieben wird und das erste Anwendungsprogramm sicher ausführt, und der sechste Prozessorkern mit einem nichtsicheren Betriebssystem, also einem solchen, das die vorgegebene Sicherheitsstufe nicht erreicht, betrieben wird und ein drittes Anwendungsprogramm nichtsicher, also unter Unterschreitung der vorgegebenen Sicherheitsstufe ausführt.

Bezogen auf die beiden letztgenannten Ausgestaltungen wird es als vorteilhaft angesehen, wenn der fünfte Prozessorkern bezogen auf die Prozessorstruktur ein anderer Prozessorkern als der erste Prozessorkern beim ersten Prozessor ist und an anderer Stelle innerhalb des zweiten Prozessors liegt als der erste Prozessorkern beim ersten Prozessor und der vierte Prozessorkern bezogen auf die Prozessorstruktur ein anderer Prozessorkern als der zweite Prozessorkern beim ersten Prozessor ist und an anderer Stelle innerhalb des zweiten Prozessors liegt als der zweite Prozessorkern beim ersten Prozessor. Durch eine solche unterschiedliche Zuordnung der Prozessorkerne bzw. der Anwendungsprogramme zur Prozessorstruktur der Prozessoren lassen sich in einfacher Weise Hardwarefehler bzw. Hardwareabweichungen der Prozessoren erkennen.

Vorteilhaft ist es, wenn die Arbeitsergebnisse des oder der sicher betriebenen Anwendungsprogramme des ersten Prozessors mit den Arbeitsergebnissen des oder der korrespondierenden sicher betriebenen Anwendungsprogramme des zweiten Prozessors verglichen werden und ein Warnsignal erzeugt wird, wenn die Arbeitsergebnisse abweichen oder über ein vorgegebenes Maß voneinander abweichen.

Alternativ oder zusätzlich ist es vorteilhaft, wenn die Speicherinhalte des ersten und fünften Prozessorkerns und die Speicherinhalte des zweiten und vierten Prozessorkerns miteinander verglichen werden und auf eine fehlerhafte Rückwirkung des nichtsicher betriebenen Prozessorkerns des zweiten Prozessors auf die sicher betriebenen Prozessorkerne des zweiten Prozessors geschlossen wird, wenn die Speicherinhalte ganz oder in Teilen, insbesondere mit Blick auf Betriebsdaten der sicheren Anwendungsprogramme, voneinander abweichen oder über ein vorgegebenes Maß hinaus voneinander abweichen.

Bei einer weiteren als vorteilhaft angesehenen Variante ist vorgesehen, dass mindestens ein Prozessorkern des ersten Prozessors abgeschaltet ist und mindestens ein Prozessorkern des ersten Prozessors betrieben wird, wobei alle betriebenen Prozessorkerne des ersten Prozessors ausschließlich sicher betrieben werden, jedem betriebenen Prozessorkern des ersten Prozessors jeweils genau ein Prozessorkern des zweiten Prozessors zugeordnet ist, der mit demselben sicheren Betriebssystem arbeitet wie der zugeordnete Prozessorkern des ersten Prozessors und dasselbe oder dieselben Anwendungsprogramme wie der zugeordnete Prozessorkern des ersten Prozessors ausführt, und mindestens ein Prozessorkern beim zweiten Prozessor mit einem nichtsicheren Betriebssystem, also einem solchen, das die vorgegebene Sicherheitsstufe nicht erreicht, betrieben wird und ein Anwendungsprogramm nichtsicher, also unter Unterschreitung der vorgegebenen Sicherheitsstufe, ausführt.

Die sicher betriebenen Prozessorkerne des zweiten Prozessors liegen - bezogen auf die Prozessorstruktur - vorzugsweise räumlich an anderer Stelle innerhalb des zweiten Prozessors als die zugeordneten Prozessorkerne beim ersten Prozessor.

Mit der Rechenanlage wird vorzugsweise eine Komponente einer technischen Anlage betrieben, insbesondere eine schienenfahrzeugseitige Komponente eines Schienenfahrzeugs oder eine streckenseitige Komponente, insbesondere eine Leitstelle oder Stellwerk.

Die Erfindung bezieht sich darüber hinaus auf eine Rechenanlage mit zumindest zwei parallel betriebenen Prozessoren.

Erfindungsgemäß ist bezüglich einer solchen Rechenanlage vorgesehen, dass ein erster und zweiter Prozessor der Rechenanlage baugleich sind und jeweils zumindest zwei Prozessorkerne aufweisen, ein Prozessorkern des ersten Prozessors und ein Prozessorkern des zweiten Prozessors jeweils sicher betrieben werden, also auf der Basis eines sicheren Betriebssystems, das eine vorgegebene Sicherheitsstufe erreicht oder überschreitet, und jeweils mindestens ein Anwendungsprogramm sicher, also unter Erreichung der vorgegebenen Sicherheitsstufe, ausführen, wobei der genannte Prozessorkern des ersten Prozessors und der genannte Prozessorkern des zweiten Prozessors jeweils dasselbe Anwendungsprogramm oder dieselben Anwendungsprogramme sicher ausführen, wobei die übrigen Prozessorkerne des ersten Prozessors entweder abgeschaltet sind oder ebenfalls sicher betrieben werden, sei es auf der Basis des genannten sicheren Betriebssystems oder eines oder mehrerer anderer sicherer Betriebssysteme und unter sicherer Ausführung derselben Anwendungsprogramme und/oder anderer Anwendungsprogramme, und wobei bei dem zweiten Prozessor mindestens ein Prozessorkern nichtsicher betrieben wird, also auf der Basis eines nichtsicheren Betriebssystems, das die vorgegebene Sicherheitsstufe nicht erreicht, und mindestens ein Anwendungsprogramm nichtsicher, also unter Unterschreitung der vorgegebenen Sicherheitsstufe, ausführt.

Bezüglich der Vorteile der erfindungsgemäßen Rechenanlage sei auf die obigen Ausführungen im Zusammenhang mit dem erfindungsgemäßen Verfahren verwiesen.

Die Rechenanlage weist vorzugsweise eine Vergleichseinrichtung auf, die Speicherinhalte der genannten gleich betriebenen Prozessorkerne miteinander vergleicht und auf eine fehlerhafte Rückwirkung des nichtsicher betriebenen Prozessorkerns auf den sicher betriebenen Prozessorkern des zweiten Prozessors schließt, wenn die Speicherinhalte ganz oder in Teilen, insbesondere mit Blick auf Betriebsdaten des sicheren Anwendungsprogramms, bei den beiden sicher betriebenen Prozessorkernen voneinander abweichen oder über ein vorgegebenes Maß hinaus abweichen.

Der erste Prozessor der Rechenanlage weist vorzugsweise zumindest drei Prozessorkerne auf, von denen ein ausgewählter erster Prozessorkern mit einem sicheren Betriebssystem, also einem solchen, das eine vorgegebene Sicherheitsstufe erreicht oder überschreitet, betrieben wird und ein erstes Anwendungsprogramm sicher, also unter Erreichung der vorgegebenen Sicherheitsstufe, ausführt, ein ausgewählter zweiter Prozessorkern mit dem oder einem anderen sicheren Betriebssystem betrieben wird und ein zweites Anwendungsprogramm sicher ausführt, und ein ausgewählter dritter Prozessorkern abgeschaltet ist.

Der zweite Prozessor der Rechenanlage weist vorzugsweise ebenfalls zumindest drei Prozessorkerne auf, nachfolgend vierter, fünfter und sechster Prozessorkern genannt, von denen der vierte Prozessorkern mit demselben sicheren Betriebssystem wie der zweite Prozessorkern betrieben wird und das zweite Anwendungsprogramm sicher ausführt, der fünfte Prozessorkern mit demselben sicheren Betriebssystem wie der erste Prozessorkern betrieben wird und das erste Anwendungsprogramm sicher ausführt, der sechste Prozessorkern mit einem nichtsicheren Betriebssystem, also einem solchen, das die vorgegebene Sicherheitsstufe nicht erreicht, betrieben wird und ein drittes Anwendungsprogramm nichtsicher, also unter Unterschreitung der vorgegebenen Sicherheitsstufe ausführt.

Der vierte Prozessorkern ist bezogen auf die Prozessorstruktur vorzugsweise ein anderer Prozessorkern als der zweite Prozessorkern beim ersten Prozessor und liegt an anderer Stelle innerhalb des zweiten Prozessors als der zweite Prozessorkern beim ersten Prozessor.

Der fünfte Prozessorkern ist bezogen auf die Prozessorstruktur vorzugsweise ein anderer Prozessorkern als der erste Prozessorkern beim ersten Prozessor und liegt an anderer Stelle innerhalb des zweiten Prozessors als der erste Prozessorkern beim ersten Prozessor.

Ale besonders vorteilhaft wird es angesehen, wenn mindestens ein Prozessorkern des ersten Prozessors abgeschaltet ist und mindestens ein Prozessorkern des ersten Prozessors betrieben wird, wobei alle betriebenen Prozessorkerne des ersten Prozessors ausschließlich sicher betrieben werden, jedem betriebenen Prozessorkern des ersten Prozessors jeweils genau ein Prozessorkern des zweiten Prozessors zugeordnet ist, der gleich betrieben wird, also mit demselben sicheren Betriebssystem arbeitet wie der zugeordnete Prozessorkern des ersten Prozessors und dasselbe oder dieselben Anwendungsprogramme wie der zugeordnete Prozessorkern des ersten Prozessors ausführt, mindestens ein Prozessorkern beim zweiten Prozessor mit einem nichtsicheren Betriebssystem, also einem solchen, das die vorgegebene Sicherheitsstufe nicht erreicht, betrieben wird und mindestens ein Anwendungsprogramm nichtsicher, also unter Unterschreitung der vorgegebenen Sicherheitsstufe, ausführt, und die sicher betriebenen Prozessorkerne des zweiten Prozessors - bezogen auf die Prozessorstruktur - räumlich an anderer Stelle innerhalb des zweiten Prozessors liegen als die zugeordneten Prozessorkerne beim ersten Prozessor.

Die Erfindung bezieht sich außerdem auf eine Komponente für eine technische Anlage. Erfindungsgemäß ist diese mit einer Rechenanlage wie oben beschrieben ausgestattet.

Vorteilhaft ist es, wenn die Komponente eine fahrzeugseitige Komponente, insbesondere ein Steuergerät eines Fahrzeugs, vorzugsweise eines Schienenfahrzeugs, ist oder die Komponente eine streckenseitige Komponente, insbesondere ein Leitstellenrechner einer Leitzentrale einer Eisenbahngleisanlage oder ein Stellwerksrechner eines Stellwerks einer Eisenbahngleisanlage ist.

Die Erfindung wird nachfolgend anhand von Ausführungsbeispielen näher erläutert; dabei zeigen beispielhaft
- Figur 1: ein Ausführungsbeispiel für eine erfindungsgemäße Rechenanlage, bei der zwei Prozessoren jeweils drei Prozessorkerne aufweisen, wobei anhand des Ausführungsbeispiels gemäß Figur 1 ein Ausführungsbeispiel für das erfindungsgemäße Verfahren erläutert wird,
- Figur 2: ein weiteres Ausführungsbeispiel für eine erfindungsgemäße Rechenanlage, bei der zwei Prozessoren jeweils vier Prozessorkerne aufweisen, wobei anhand des Ausführungsbeispiels gemäß Figur 2 ein weiteres Ausführungsbeispiel für das erfindungsgemäße Verfahren erläutert wird, und
- Figur 3: ein Ausführungsbeispiel für eine Eisenbahngleisanlage und ein Ausführungsbeispiel für ein Schienenfahrzeug, die mit erfindungsgemäßen Rechenanlagen ausgestattet sind.

In den Figuren werden der Übersicht halber für identische oder vergleichbare Komponenten stets dieselben Bezugszeichen verwendet.

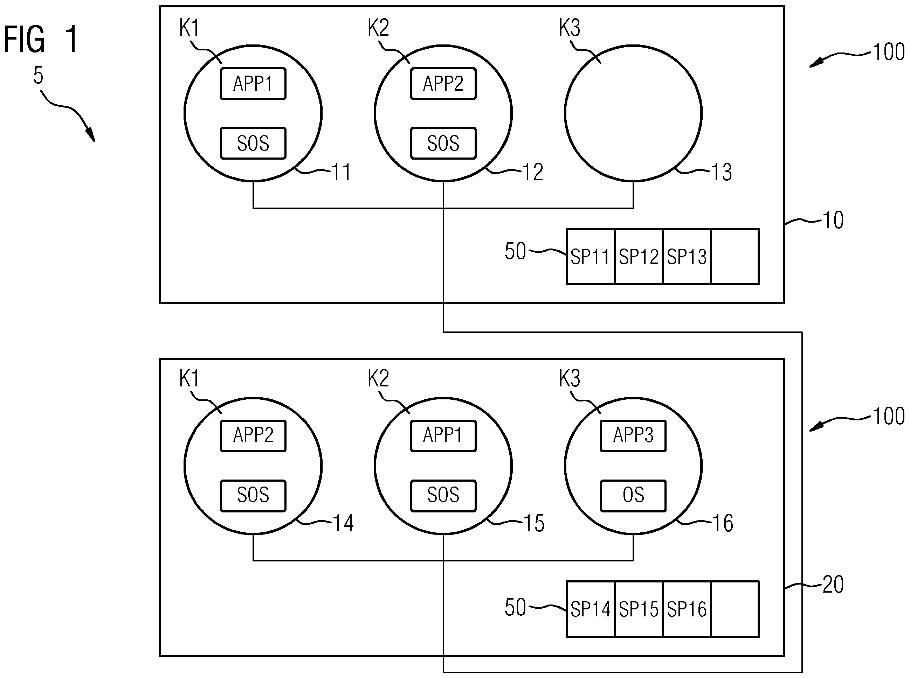

Die Figur 1 zeigt eine Rechenanlage 5, die sechs Prozessorkerne umfasst, nämlich einen ersten Prozessorkern 11, einen zweiten Prozessorkern 12, einen dritten Prozessorkern 13, einen vierten Prozessorkern 14, einen fünften Prozessorkern 15 und einen sechsten Prozessorkern 16.

Die drei Prozessorkerne 11, 12 und 13 befinden sich in einem ersten Prozessor 10 der Rechenanlage 5 und die Prozessorkerne 14, 15 und 16 befinden sich in einem zweiten Prozessor 20 der Rechenanlage 5.

Die beiden Prozessoren 10 und 20 sind baugleich und weisen jeweils einen Halbleiterchip 100 auf. Die Halbleiterchips 100 umfassen Chipabschnitte K1, K2 und K3, in denen jeweils ein Prozessorkern angeordnet ist.

Bei dem Ausführungsbeispiel gemäß Figur 1 befindet sich der Chipabschnitt K1 an derselben Stelle - bezogen auf die Prozessorstruktur und bezogen auf den Halbleiterchip 100 - wie der Chipabschnitt K1 beim zweiten Prozessor 20. In entsprechender Weise befinden sich die Chipabschnitte K2 und K3 beim Halbleiterchip 100 des ersten Prozessors 10 jeweils an derselben Stelle wie die korrespondierenden Chipabschnitte K2 und K3 beim Halbleiterchip 100 des zweiten Prozessors 20.

Die beiden Prozessoren 10 und 20 führen jeweils ein erstes Anwendungsprogramm APP1 und ein zweites Anwendungsprogramm APP2 unter Heranziehung eines sicheren Betriebssystems SOS sicher aus. Unter einer "sicheren" Ausführung eines Anwendungsprogramms ist hier beispielhaft zu verstehen, dass die Normen EN50128 und EN50129 erfüllt werden. Unter "sicheren" Betriebssystemen SOS werden hier beispielhaft ebenfalls solche verstanden, die die Normen EN50128 und EN50129 erfüllen.

Die Ausführung der Anwendungsprogramme APP1 und APP2 erfolgt bei den beiden Prozessoren 10 und 20 in unterschiedlichen Chipabschnitten bzw. in verschiedenen Prozessorkernen. So lässt sich in der Figur 1 erkennen, dass das erste Anwendungsprogramm APP1 im ersten Prozessorkern 11, hier also im ersten Chipabschnitt K1 des ersten Prozessors durchgeführt wird, während das erste Anwendungsprogramm APP1 beim zweiten Prozessor 20 vom fünften Prozessorkern 15, hier also im zweiten Chipabschnitt K2 durchgeführt wird. Die Ausführung des ersten Anwendungsprogramms APP1 erfolgt also in unterschiedlichen Chipabschnitten K1 und K2 der Halbleiterchips 100 der beiden Prozessoren 10 und 20.

In entsprechender Weise erfolgt auch die Ausführung des zweiten Anwendungsprogramms APP2 in unterschiedlichen Chipabschnitten. So lässt sich erkennen, dass das zweite Anwendungsprogramm APP2 vom ersten Prozessor 10 im zweiten Chipabschnitt K2 und somit vom zweiten Prozessorkern 12 ausgeführt wird; das zweite Anwendungsprogramm APP2 wird vom zweiten Prozessor 20 im ersten Chipabschnitt K1 und somit vom vierten Prozessorkern 14 durchgeführt.

Durch die Durchführung der Anwendungsprogramme APP1 und APP2 in jeweils unterschiedlichen Chipabschnitten K1 und K2 der Prozessoren 10 und 20 lässt sich erreichen, dass etwaige Hardwarefehler oder Hardwareabweichungen in den Halbleiterchips 100 einfach erkannt werden können, indem beispielsweise Arbeitsergebnisse und/oder Speicherinhalte der Anwendungsprogramme APP1 und APP2 prozessorübergreifend verglichen werden.

Die Figur 1 lässt darüber hinaus erkennen, dass der zweite Prozessor 20 in seinem Chipabschnitt K3, also von dem sechsten Prozessorkern 16, ein nichtsicheres Anwendungsprogramm APP 3 unter Heranziehung eines nichtsicheren Betriebssystems OS durchführen lässt. Ein solches nichtsicheres Anwendungsprogramm APP3 wird vom ersten Prozessor 10 nicht durchgeführt; der dritte Chipabschnitt K3 wird vom ersten Prozessor 10 daher nicht betrieben und ist sicher abgeschaltet.

Durch die bei den beiden Prozessoren 10 und 20 vorgesehene Arbeitsteilung dergestalt, dass der erste Prozessor 10 ausschließlich mit sicheren Anwendungsprogrammen APP1 und APP2 betrieben wird und nur beim zweiten Prozessor 20 nichtsichere Anwendungsprogramme, hier APP3, erlaubt sind, lässt sich erreichen, dass ein etwaiger Fehler durch das nichtsichere Anwendungsprogramm APP3 oder auch durch das nichtsichere Betriebssystem OS in einfacher Weise festgestellt werden kann. Arbeitet nämlich das nichtsichere Anwendungsprogramm APP3 beim zweiten Prozessor 20 fehlerhaft und beeinflusst die Arbeitsweise der sicher betriebenen Prozessorkerne 14 und 15, so kann dies durch einen Vergleich der Speicherinhalte und/oder der Arbeitsergebnisse der sicher betriebenen Prozessorkerne 14 und 15 des zweiten Prozessors 20 mit den Speicherinhalten und/oder Arbeitsergebnissen der sicher betriebenen Prozessorkerne 12 und 11 des ausschließlich sicher betriebenen ersten Prozessors 10 festgestellt werden.

Bei dem Ausführungsbeispiel gemäß Figur 1 ist jedem Prozessor 10 jeweils ein Speicher 50 zugeordnet, der in dem jeweiligen Halbleiterchip 100 des jeweiligen Prozessors 10 bzw. 20 integriert sein kann oder alternativ durch eine separate Komponente gebildet sein kann, die dem jeweiligen Halbleiterchip 100 bzw. dem jeweiligen Prozessor zugeordnet ist.

Die beiden Speicher 50 der beiden Prozessoren 10 und 20 weisen jeweils Speicherbereiche auf, die Prozessorkernen individuell zugeordnet sind. So ist der Speicherbereich SP11 des Speichers 50 des ersten Prozessors 10 dem ersten Prozessorkern 11 und damit dem Chipabschnitt K1 des ersten Prozessors 10 zugeordnet; die Speicherbereiche SP12 und SP13 sind dem zweiten Prozessorkern 12 bzw. dem dritten Prozessorkern 13 zugeordnet.

In entsprechender Weise sind Speicherbereiche SP14, SP15 und SP16 des Speichers 50 beim zweiten Prozessor 20 dem vierten Prozessorkern 14, dem fünften Prozessorkern 15 und dem sechsten Prozessorkern 16 zugeordnet.

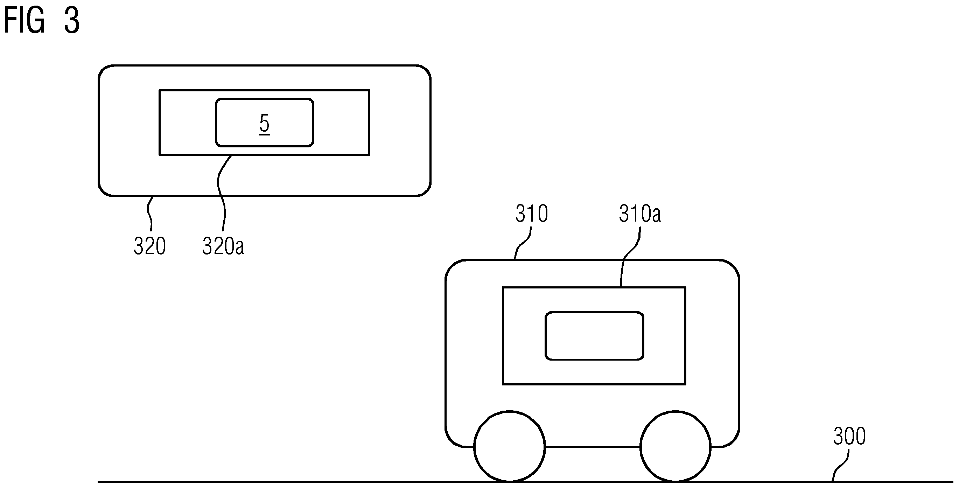

In den Speicherbereichen SP11 bis SP16 können jeweils Arbeitsergebnisse der Anwendungsprogramme des jeweiligen Prozessorkerns abgespeichert werden, beispielsweise Betriebsdaten einer technischen Anlage, die von den Anwendungsprogrammen APP1 bis APP3 gesteuert oder verwaltet wird. Handelt es sich bei der technischen Anlage beispielsweise um eine Eisenbahngleisanlage (siehe Figur 3), so können entsprechende eisenbahntechnische Betriebsdaten, zum Beispiels Besetztmeldungen, Freigabeinformationen, Zugnummern, Zuggeschwindigkeiten, Fahrplandaten usw. als Speicherinhalte in den Speicherbereichen SP11 bis SP16 abgespeichert werden.

Vorteilhaft ist es, wenn die Rechenanlage 5 eine Vergleichseinrichtung aufweist, die einen Vergleich der Speicherinhalte der Speicherbereiche ermöglicht. Eine solche Vergleichseinrichtung kann beispielsweise den Speicherinhalt des Speicherbereichs SP11, der dem ersten Prozessorkern 11 und damit dem ersten Anwendungsprogramm APP1 zugeordnet ist, mit dem Speicherbereich SP15, der dem fünften Prozessorkern 15 und damit ebenfalls dem ersten Anwendungsprogramm APP1 beim zweiten Prozessor 20 zugeordnet ist, vergleichen und im Falle einer Abweichung der Speicherinhalte ein Warn- oder Fehlersignal ausgeben.

In entsprechender Weise kann eine solche Vergleichseinrichtung die Speicherinhalte SP12 und SP14 miteinander vergleichen, in denen die Arbeitsergebnisse, beispielsweise Betriebsdaten, des zweiten Anwendungsprogramms APP2 bei den beiden Prozessoren 10 und 20 abgespeichert werden.

Eine solche Vergleichseinrichtung kann durch eine separate Hardwarekomponente oder durch eine softwaremäßig implementierte Vergleichsfunktionalität realisiert sein, die von den sicher betriebenen Prozessorkernen selbst ausgeführt wird.

Zusammengefasst ist beim Ausführungsbeispiel gemäß Figur 1 in sehr einfacher Weise eine Fehleroffenbarung einer fehlerhaften Arbeitsweise des nichtsicheren Anwendungsprogramms APP3 möglich, wenn dieses eine Rückwirkung auf die sicher betriebenen Anwendungsprogramme APP1 und APP2 beim zweiten Prozessor 20 ausübt, weil nämlich durch einen Vergleich mit den Arbeitsergebnissen und der Arbeitsweise der entsprechenden sicher betriebenen Anwendungsprogramme APP1 und APP2 des ersten Prozessors 10 eine solche fehlerhafte Rückwirkung erkennbar ist. Die Fehleroffenbarung basiert konkret auf dem Gedanken, dass bei dem ersten Prozessor 10 die Prozessorkerne entweder sicher oder gar nicht betrieben werden, und nichtsichere Anwendungsprogramme ausschließlich im zweiten Prozessor 20 zugelassen werden, so dass Fehler nichtsicherer Anwendungsprogramme bei dem ersten Prozessor 10 schlicht nicht auftreten können.

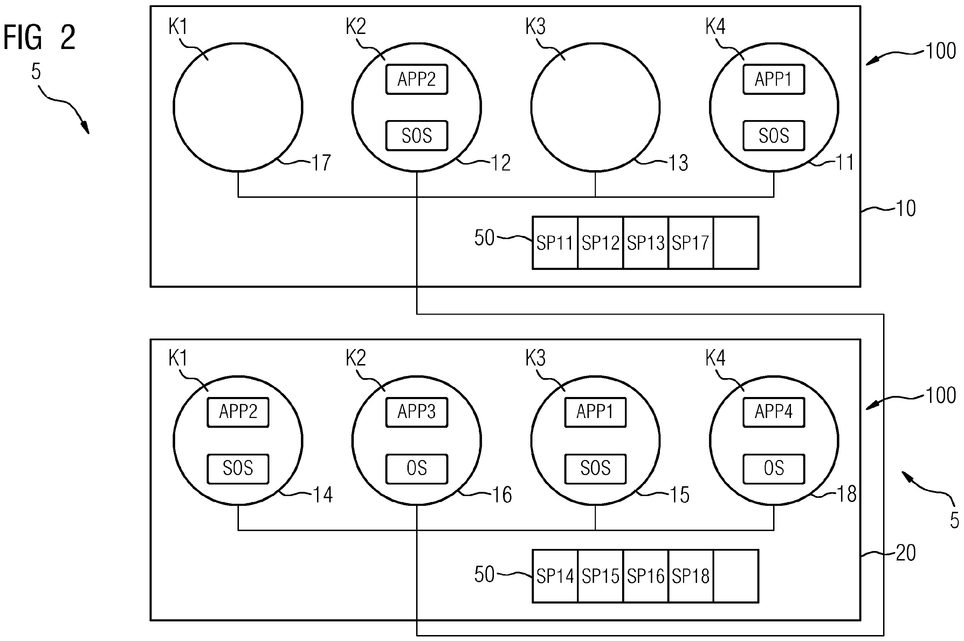

Die Zuordnung des ersten Prozessorkerns 11, der das erste Anwendungsprogramm APP1 ausführt, zum Chipabschnitt K1 des ersten Prozessors 10, die Zuordnung des zweiten Prozessorkerns 12, der das zweite Anwendungsprogramm APP2 ausführt, zum Chipabschnitt K2 des ersten Prozessors 10, die Zuordnung des vierten Prozessorkerns 14, der das zweite Anwendungsprogramm APP2 ausführt, zum Chipabschnitt K1 des zweiten Prozessors 20 und die Zuordnung des fünften Prozessorkerns 15, der das erste Anwendungsprogramm APP1 ausführt, zum Chipabschnitt K2 des zweiten Prozessors 20 sind hier nur beispielhaft zu verstehen; die genannten Prozessorkerne bzw. die Anwendungsprogramme können auch anderen Chipabschnitten zugeordnet sein und auf den Halbleiterchips anders verteilt sein; dies soll nachfolgend anhand der Figur 2 beispielhaft erläutert werden.

Die Figur 2 zeigt ein zweites Ausführungsbeispiel für eine Rechenanlage 5, die mit zwei Prozessoren 10 und 20 ausgestattet ist. Im Unterschied zu dem Ausführungsbeispiel gemäß Figur 1 weist jeder der Prozessoren 10 und 20 jeweils vier Prozessorkerne auf, also zwei mehr als beim Ausführungsbeispiel gemäß Figur 1. Die zwei zusätzlichen Prozessorkerne sind in der Figur 2 mit den Bezugszeichen 17 und 18 gekennzeichnet

Der zweite Prozessor 20 wird mit zwei nichtsicheren Anwendungsprogrammen APP3 und APP4 betrieben, die in den Prozessorkernen 16 und 18 durchgeführt werden. Demgemäß bleiben beim ersten Prozessor 10 zwei der Prozessorkerne, beispielsweise die Prozessorkerne 13 und 17, ungenutzt.

Die Zuordnung zu den Chipabschnitte ist bei der Figur 2 beispielsweise wie folgt: Der sogenannte erste Prozessorkern 11, der das erste Anwendungsprogramm APP1 ausführt, ist dem Chipabschnitt K4 des ersten Prozessors 10 zugeordnet, der sogenannte zweite Prozessorkern 12, der das zweite Anwendungsprogramm APP2 ausführt, ist dem Chipabschnitt K2 des ersten Prozessors 10 zugeordnet, der sogenannte vierte Prozessorkern 14, der das zweite Anwendungsprogramm APP2 ausführt, ist dem Chipabschnitt K1 des zweiten Prozessors 20 zugeordnet und der sogenannte fünfte Prozessorkern 15, der das erste Anwendungsprogramm APP1 ausführt, ist dem Chipabschnitt K3 des zweiten Prozessors 20 zugeordnet. Die nichtsicheren Anwendungsprogramme APP3 und APP4 laufen in den Chipabschnitten K2 und K4 des zweiten Prozessors 20.

Im Übrigen gelten die obigen Erläuterungen im Zusammenhang mit der Figur 1 entsprechend.

Die Figur 3 zeigt ein Ausführungsbeispiel für eine Eisenbahngleisanlage 300, auf der ein Schienenfahrzeug 310 fährt.

Das Schienenfahrzeug 310 weist ein Steuergerät 310a auf, das eine Rechenanlage 5 gemäß den Figuren 1 und 2 umfasst.

Die Eisenbahngleisanlage 300 umfasst eine streckenseitige Komponente in Form eines Stellwerksrechners 320a eines Stellwerks 320. Der Stellwerksrechner 320a weist eine Rechenanlage 5 gemäß den Figuren 1 und 2 auf.

Bezüglich der Arbeitsweise des Steuergeräts 310a und des Stellwerksrechners 320a sei auf die obigen Ausführungen im Zusammenhang mit der Rechenanlage 5 gemäß den Figuren 1 und 2 verwiesen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben einer Rechenanlage (5), die zumindest zwei parallel betriebene Prozessoren (10, 20) aufweist, **dadurch gekennzeichnet, dass**
- ein erster und zweiter Prozessor (10, 20) der Rechenanlage (5) baugleich sind und jeweils zumindest zwei Prozessorkerne aufweisen und
- ein Prozessorkern des ersten Prozessors (10) und ein Prozessorkern des zweiten Prozessors (20) jeweils sicher betrieben werden, also auf der Basis eines sicheren Betriebssystems (SOS), das eine vorgegebene Sicherheitsstufe erreicht oder überschreitet, und jeweils mindestens ein Anwendungsprogramm (APP1, APP2) sicher, also unter Erreichung der vorgegebenen Sicherheitsstufe, ausführen,
- wobei der genannte Prozessorkern des ersten Prozessors (10) und der genannte Prozessorkern des zweiten Prozessors (20) jeweils dasselbe Anwendungsprogramm oder dieselben Anwendungsprogramme (APP1, APP2) sicher ausführen,
- wobei die übrigen Prozessorkerne des ersten Prozessors (10) entweder abgeschaltet sind oder ebenfalls sicher betrieben werden, sei es auf der Basis des genannten sicheren Betriebssystems (SOS) oder eines oder mehrerer anderer sicherer Betriebssysteme und unter sicherer Ausführung derselben Anwendungsprogramme und/oder anderer Anwendungsprogramme,
- wobei bei dem zweiten Prozessor (20) mindestens ein Prozessorkern nichtsicher betrieben wird, also auf der Basis eines nichtsicheren Betriebssystems (OS), das die vorgegebene Sicherheitsstufe nicht erreicht, und mindestens ein Anwendungsprogramm (APP3) nichtsicher, also unter Unterschreitung der vorgegebenen Sicherheitsstufe, ausführt.

2. Verfahren nach Anspruch 1,
**dadurch gekennzeichnet, dass**
die Speicherinhalte der genannten zwei gleich betriebenen Prozessorkerne verglichen werden und auf eine fehlerhafte Rückwirkung des nichtsicher betriebenen Prozessorkerns des zweiten Prozessors (20) auf den sicher betriebenen Prozessorkern des zweiten Prozessors (20) geschlossen wird, wenn die Speicherinhalte ganz oder in Teilen, insbesondere mit Blick auf Betriebsdaten des sicheren Anwendungsprogramms, bei den beiden sicher betriebenen Prozessorkernen voneinander abweichen oder über ein vorgegebenes Maß hinaus voneinander abweichen.

3. Verfahren nach einem der voranstehenden Ansprüche,
**dadurch gekennzeichnet, dass**
der erste Prozessor (10) der Rechenanlage (5) zumindest drei Prozessorkerne (11, 12, 13) aufweist, von denen
- ein ausgewählter erster Prozessorkern (11) mit einem sicheren Betriebssystem (SOS), also einem solchen, das eine vorgegebene Sicherheitsstufe erreicht oder überschreitet, betrieben wird und ein erstes Anwendungsprogramm (APP1) sicher, also unter Erreichung der vorgegebenen Sicherheitsstufe, ausführt,
- ein ausgewählter zweiter Prozessorkern (12) mit dem oder einem anderen sicheren Betriebssystem (SOS) betrieben wird und ein zweites Anwendungsprogramm (APP2) sicher ausführt, und
- ein ausgewählter dritter Prozessorkern (13) abgeschaltet ist,
- der zweite Prozessor (20) ebenfalls zumindest drei Prozessorkerne (14, 15, 16) aufweist, nachfolgend vierter, fünfter und sechster Prozessorkern genannt, von denen
- der vierte Prozessorkern (14) mit demselben sicheren Betriebssystem (SOS) wie der zweite Prozessorkern (12) betrieben wird und das zweite Anwendungsprogramm (APP2) sicher ausführt,
- der fünfte Prozessorkern (15) mit demselben sicheren Betriebssystem (SOS) wie der erste Prozessorkern (11) betrieben wird und das erste Anwendungsprogramm (APP1) sicher ausführt, und
- der sechste Prozessorkern (16) mit einem nichtsichernichtsicheren Betriebssystem, also einem solchen, das die vorgegebene Sicherheitsstufe nicht erreicht, betrieben wird und ein drittes Anwendungsprogramm (APP3) nichtsicher, also unter Unterschreitung der vorgegebenen Sicherheitsstufe ausführt.

4. Verfahren nach Anspruch 3,
**dadurch gekennzeichnet, dass**
- der fünfte Prozessorkern (15) bezogen auf die Prozessorstruktur ein anderer Prozessorkern als der erste Prozessorkern (11) beim ersten Prozessor (10) ist und an anderer Stelle innerhalb des zweiten Prozessors (20) liegt als der erste Prozessorkern (11) beim ersten Prozessor (10) und
- der vierte Prozessorkern (14) bezogen auf die Prozessorstruktur ein anderer Prozessorkern als der zweite Prozessorkern (12) beim ersten Prozessor (11) ist und an anderer Stelle innerhalb des zweiten Prozessors (20) liegt als der zweite Prozessorkern (12) beim ersten Prozessor.

5. Verfahren nach einem der voranstehenden Ansprüche,
**dadurch gekennzeichnet, dass**
die Arbeitsergebnisse des oder der sicher betriebenen Anwendungsprogramme (APP1, APP2) des ersten Prozessors (10) mit den Arbeitsergebnissen des oder der korrespondierenden sicher betriebenen Anwendungsprogramme (APP1, APP2) des zweiten Prozessors (20) verglichen werden und ein Warnsignal erzeugt wird, wenn die Arbeitsergebnisse abweichen oder über ein vorgegebenes Maß voneinander abweichen.

6. Verfahren nach einem der voranstehenden Ansprüche,
**dadurch gekennzeichnet, dass**
die Speicherinhalte des ersten (11) und fünften Prozessorkerns (15) und die Speicherinhalte des zweiten (12) und vierten Prozessorkerns (14) miteinander verglichen werden und auf eine fehlerhafte Rückwirkung des nichtsicher betriebenen Prozessorkerns (16) des zweiten Prozessors (20) auf die sicher betriebenen Prozessorkerne (14, 15) des zweiten Prozessors (20) geschlossen wird, wenn die Speicherinhalte ganz oder in Teilen, insbesondere mit Blick auf Betriebsdaten der sicheren Anwendungsprogramme (APP1, APP2), voneinander abweichen oder über ein vorgegebenes Maß hinaus voneinander abweichen.

7. Verfahren nach einem der voranstehenden Ansprüche,
**dadurch gekennzeichnet, dass**
- mindestens ein Prozessorkern des ersten Prozessors (10) abgeschaltet ist und mindestens ein Prozessorkern des ersten Prozessors (10) betrieben wird, wobei alle betriebenen Prozessorkerne des ersten Prozessors (10) ausschließlich sicher betrieben werden,
- jedem betriebenen Prozessorkern des ersten Prozessors (10) jeweils genau ein Prozessorkern des zweiten Prozessors (20) zugeordnet ist, der mit demselben sicheren Betriebssystem (SOS) arbeitet wie der zugeordnete Prozessorkern des ersten Prozessors (10) und dasselbe oder dieselben Anwendungsprogramme wie der zugeordnete Prozessorkern des ersten Prozessors (10) ausführt, und
- mindestens ein Prozessorkern beim zweiten Prozessor (20) mit einem nichtsicheren Betriebssystem (OS), also einem solchen, das die vorgegebene Sicherheitsstufe nicht erreicht, betrieben wird und ein Anwendungsprogramm nichtsicher, also unter Unterschreitung der vorgegebenen Sicherheitsstufe, ausführt.

8. Verfahren nach einem der voranstehenden Ansprüche,
**dadurch gekennzeichnet, dass**
die sicher betriebenen Prozessorkerne des zweiten Prozessors (20) - bezogen auf die Prozessorstruktur - räumlich an anderer Stelle innerhalb des zweiten Prozessors (20) liegen als die zugeordneten Prozessorkerne beim ersten Prozessor (10).

9. Verfahren nach einem der voranstehenden Ansprüche,
**dadurch gekennzeichnet, dass**
mit der Rechenanlage (5) eine Komponente einer technischen Anlage betrieben wird, insbesondere eine schienenfahrzeugseitige Komponente eines Schienenfahrzeugs (310) oder eine streckenseitige Komponente, insbesondere eine Leitstelle oder Stellwerk (320).

10. Rechenanlage (5) mit zumindest zwei parallel betriebenen Prozessoren (10, 20),
**dadurch gekennzeichnet, dass**
- ein erster (10) und zweiter Prozessor (20) der Rechenanlage (5) baugleich sind und jeweils zumindest zwei Prozessorkerne aufweisen,
- ein Prozessorkern des ersten Prozessors (10) und ein Prozessorkern des zweiten Prozessors (20) jeweils sicher betrieben werden, also auf der Basis eines sicheren Betriebssystems (SOS), das eine vorgegebene Sicherheitsstufe erreicht oder überschreitet, jeweils mindestens ein Anwendungsprogramm (APP1, APP2) sicher, also unter Erreichung der vorgegebenen Sicherheitsstufe, ausführen,
- wobei der genannte Prozessorkern des ersten Prozessors (10) und der genannte Prozessorkern des zweiten Prozessors (20) jeweils dasselbe Anwendungsprogramm oder dieselben Anwendungsprogramme (APP1, APP2) sicher ausführen,
- wobei die übrigen Prozessorkerne des ersten Prozessors (10) entweder abgeschaltet sind oder ebenfalls sicher betrieben werden, sei es auf der Basis des genannten sicheren Betriebssystems (SOS) oder eines oder mehrerer anderer sicherer Betriebssysteme und unter sicherer Ausführung derselben Anwendungsprogramme und/oder anderer Anwendungsprogramme und
- wobei bei dem zweiten Prozessor (20) mindestens ein Prozessorkern nichtsicher betrieben wird, also auf der Basis eines nichtsicheren Betriebssystems (OS), das die vorgegebene Sicherheitsstufe nicht erreicht, und mindestens ein Anwendungsprogramm (APP3) nichtsicher, also unter Unterschreitung der vorgegebenen Sicherheitsstufe, ausführt.

11. Rechenanlage (5) nach Anspruch 10,
**dadurch gekennzeichnet, dass**
die Rechenanlage (5) eine Vergleichseinrichtung aufweist, die Speicherinhalte der genannten gleich betriebenen Prozessorkerne miteinander vergleicht und auf eine fehlerhafte Rückwirkung des nichtsicher betriebenen Prozessorkerns auf den sicher betriebenen Prozessorkern des zweiten Prozessors (20) schließt, wenn die Speicherinhalte ganz oder in Teilen, insbesondere mit Blick auf Betriebsdaten des sicheren Anwendungsprogramms, bei den beiden sicher betriebenen Prozessorkernen voneinander abweichen oder über ein vorgegebenes Maß hinaus abweichen.

12. Rechenanlage (5) nach einem der voranstehenden Ansprüche 10 bis 11,
**dadurch gekennzeichnet, dass**
der erste Prozessor (10) der Rechenanlage (5) zumindest drei Prozessorkerne (11, 12, 13)aufweist, von denen
- ein ausgewählter erster Prozessorkern (11) mit einem sicheren Betriebssystem (SOS), also einem solchen, das eine vorgegebene Sicherheitsstufe erreicht oder überschreitet, betrieben wird und ein erstes Anwendungsprogramm (APP1) sicher, also unter Erreichung der vorgegebenen Sicherheitsstufe, ausführt,
- ein ausgewählter zweiter Prozessorkern (12)mit dem oder einem anderen sicheren Betriebssystem betrieben wird und ein zweites Anwendungsprogramm (APP2) sicher ausführt, und
- ein ausgewählter dritter Prozessorkern (13) abgeschaltet ist,
der zweite Prozessor (20) der Rechenanlage (5) ebenfalls zumindest drei Prozessorkerne (14, 15, 16) aufweist, nachfolgend vierter, fünfter und sechster Prozessorkern genannt, von denen
- der vierte Prozessorkern (14) mit demselben sicheren Betriebssystem (SOS) wie der zweite Prozessorkern (12) betrieben wird und das zweite Anwendungsprogramm (APP2) sicher ausführt,
- der fünfte Prozessorkern (15) mit demselben sicheren Betriebssystem (SOS) wie der erste Prozessorkern (11) betrieben wird und das erste Anwendungsprogramm (APP1) sicher ausführt,
- der sechste Prozessorkern (16) mit einem nichtsicheren Betriebssystem (OS), also einem solchen, das die vorgegebene Sicherheitsstufe nicht erreicht, betrieben wird und ein drittes Anwendungsprogramm (APP3) nichtsicher, also unter Unterschreitung der vorgegebenen Sicherheitsstufe ausführt,
- der vierte Prozessorkern (14) bezogen auf die Prozessorstruktur ein anderer Prozessorkern als der zweite Prozessorkern (12) beim ersten Prozessor (10) ist und an anderer Stelle innerhalb des zweiten Prozessors (20) liegt als der zweite Prozessorkern (12) beim ersten Prozessor (10),
- der fünfte Prozessorkern (15) bezogen auf die Prozessorstruktur ein anderer Prozessorkern als der erste Prozessorkern (11) beim ersten Prozessor (10) ist und an anderer Stelle innerhalb des zweiten Prozessors (20) liegt als der erste Prozessorkern (11) beim ersten Prozessor (10).

13. Rechenanlage (5) nach einem der voranstehenden Ansprüche 10 bis 12,
**dadurch gekennzeichnet, dass**
- mindestens ein Prozessorkern des ersten Prozessors (10) abgeschaltet ist und mindestens ein Prozessorkern des ersten Prozessors (10) betrieben wird, wobei alle betriebenen Prozessorkerne des ersten Prozessors (10) ausschließlich sicher betrieben werden,
- jedem betriebenen Prozessorkern des ersten Prozessors (10) jeweils genau ein Prozessorkern des zweiten Prozessors (20) zugeordnet ist, der gleich betrieben wird, also mit demselben sicheren Betriebssystem (SOS) arbeitet wie der zugeordnete Prozessorkern des ersten Prozessors (10) und dasselbe oder dieselben Anwendungsprogramme (APP1, APP2) wie der zugeordnete Prozessorkern des ersten Prozessors (10) ausführt,
- mindestens ein Prozessorkern beim zweiten Prozessor (20) mit einem nichtsicheren Betriebssystem (OS), also einem solchen, das die vorgegebene Sicherheitsstufe nicht erreicht, betrieben wird und mindestens ein Anwendungsprogramm (APP3) nichtsicher, also unter Unterschreitung der vorgegebenen Sicherheitsstufe, ausführt, und
- die sicher betriebenen Prozessorkerne des zweiten Prozessors (20) - bezogen auf die Prozessorstruktur - räumlich an anderer Stelle innerhalb des zweiten Prozessors (20) liegen als die zugeordneten Prozessorkerne beim ersten Prozessor (10).

14. Komponente für eine technischen Anlage,
**dadurch gekennzeichnet, dass**
die Komponente mit einer Rechenanlage (5) nach einem der voranstehenden Ansprüche 10 bis 11 ausgestattet ist.

15. Komponente nach Anspruch 14,
**dadurch gekennzeichnet, dass**
- die Komponente eine fahrzeugseitige Komponente, insbesondere ein Steuergerät (310a)eines Fahrzeugs, vorzugsweise eines Schienenfahrzeugs (310), ist oder
- die Komponente eine streckenseitige Komponente, insbesondere ein Leitstellenrechner einer Leitzentrale einer Eisenbahngleisanlage (300) oder ein Stellwerksrechner eines Stellwerks (320) einer Eisenbahngleisanlage (300) ist.

## Claims

1. Method for operating a computer system (5) which has at least two processors (10, 20) operated in parallel,
**characterised in that**
- a first and a second processor (10, 20) of the computer system (5) are identical and each have at least two processor cores, and
- one processor core of the first processor (10) and one processor core of the second processor (20) each being operated securely, that is to say on the basis of a secure operating system (SOS) which achieves or exceeds a specified security level, and each executing at least one application program (APP1, APP2) securely, that is to say achieving the specified security level,
- wherein said processor core in the first processor (10) and said processor core in the second processor (20) securely execute the same application program or the same application programs (APP1, APP2),
- wherein the remaining processor cores of the first processor (10) are either switched off or are likewise being operated securely, whether on the basis of said secure operating system (SOS) or of one or a plurality of other secure operating systems and under the secure execution of the same application programs and/or other application programs,
- wherein at least one processor core in the second processor (20) is being operated non-securely, that is to say on the basis of a non-secure operating system (OS) which does not achieve the specified security level and is executing at least one application program (APP3) non-securely, that is to say falling short of the specified security level.

2. Method according to claim 1,
**characterised in that**
the memory contents of said two identically operated processor cores are compared and a faulty reaction of the non-securely operated processor core of the second processor (20) to the securely operated processor core of the second processor (20) is concluded if the memory contents differ from one another in whole or in part, in particular with regard to operating data of the secure application program, in the two securely operated processor cores or differ from one another beyond a specified extent.

3. Method according to one of the preceding claims,
**characterised in that**
the first processor (10) of the computer system (5) has at least three processor cores (11, 12, 13), of which
- a selected first processor core (11) is operated with a secure operating system (SOS), that is to say an operating system which achieves or exceeds a specified security level, and executes a first application program (APP1) securely, that is to say achieving the specified security level,
- a selected second processor core (12) is operated with that secure operating system or another secure operating system (SOS) and executes a second application program (APP2) securely, and
- a selected third processor core (13) is switched off,
- the second processor (20) likewise has at least three processor cores (14, 15, 16), hereinafter referred to as fourth, fifth and sixth processor core, of which
- the fourth processor core (14) is operated with the same secure operating system (SOS) as the second processor core (12) and executes the second application program (APP2) securely,
- the fifth processor core (15) is operated with the same secure operating system (SOS) as the first processor core (11) and executes the first application program (APP1) securely, and
- the sixth processor core (16) is operated with a non-secure operating system, that is to say an operating system which does not achieve the specified security level and executes a third application program (APP3) non-securely, that is to say falling short of the specified security level.

4. Method according to claim 3,
**characterised in that**
- relative to the processor structure, the fifth processor core (15) is a different processor core from the first processor core (11) in the first processor (10) and is located elsewhere within the second processor (20) from the first processor core (11) in the first processor (10) and
- relative to the processor structure, the fourth processor core (14) is a different processor core from the second processor core (12) in the first processor (11) and is located elsewhere within the second processor (20) from the second processor core (12) in the first processor.

5. Method according to one of the preceding claims,
**characterised in that**
the working results of the securely operated application program or application programs (APP1, APP2) of the first processor (10) are compared with the working results of the corresponding securely operated application program or application programs (APP1, APP2) of the second processor (20) and a warning signal is generated if the working results differ or differ from one another beyond a specified extent.

6. Method according to one of the preceding claims,
**characterised in that**
the memory contents of the first (11) and fifth processor core (15) and the memory contents of the second (12) and fourth processor core (14) are compared with one another and a faulty reaction of the non-securely operated processor core (16) of the second processor (20) to the securely operated processor cores (14, 15) of the second processor (20) is concluded if the memory contents differ from one another in whole or in part, in particular with regard to operating data of the secure application programs (APP1, APP2), or differ from one another beyond a specified extent.

7. Method according to one of the preceding claims,
**characterised in that**
- at least one processor core of the first processor (10) is switched off and at least one processor core of the first processor (10) is operated, wherein all the operated processor cores of the first processor (10) are only operated securely,
- each operated processor core of the first processor (10) is in each case assigned precisely one processor core of the second processor (20) which operates with the same secure operating system (SOS) as the assigned processor core of the first processor (10) and executes the same application program or the same application programs as the assigned processor core of the first processor (10), and
- at least one processor core in the second processor (20) is operated with a non-secure operating system (OS), that is to say an operating system which does not achieve the specified security level, and executes an application program non-securely, that is to say falling short of the specified security level.

8. Method according to one of the preceding claims,
**characterised in that**
relative to the processor structure, the securely operated processor cores of the second processor (20) are spatially located elsewhere within the second processor (20) from the assigned processor cores in the first processor (10).

9. Method according to one of the preceding claims,
**characterised in that**
with the computer system (5) a component of a technical system is operated, in particular a rail-vehicle-side component of a rail vehicle (310) or a trackside component, in particular a control centre or signal box (320).

10. Computer system (5) with at least two processors (10, 20) operated in parallel,
**characterised in that**
- a first (10) and second processor (20) of the computer system (5) are identical and each have at least two processor cores,
- one processor core of the first processor (10) and one processor core of the second processor (20) are each operated securely, that is to say on the basis of a secure operating system (SOS) which achieves or exceeds a specified security level, and each executes at least one application program (APP1, APP2) securely, that is to say achieving the specified security level,
- wherein said processor core in the first processor (10) and said processor core in the second processor (20) securely execute the same application program or the same application programs (APP1, APP2),
- wherein the remaining processor cores of the first processor (10) are either switched off or are likewise being operated securely, whether on the basis of said secure operating system (SOS) or of one or a plurality of other secure operating systems and under the secure execution of the same application programs and/or other application programs and
- wherein at least one processor core in the second processor (20) is being operated non-securely, that is to say on the basis of a non-secure operating system (OS) which does not achieve the specified security level and is executing at least one application program (APP3) non-securely, that is to say falling short of the specified security level.

11. Computer system (5) according to claim 10,
**characterised in that**
the computer system (5) has a comparison facility which compares memory contents of said identically operated processor cores with one another and concludes a faulty reaction of the non-securely operated processor core to the securely operated processor core of the second processor (20) if the memory contents differ from one another in whole or in part, in particular with regard to operating data of the secure application program, in the two securely operated processor cores or differ beyond a specified extent.

12. Computer system (5) according to one of the preceding claims 10 to 11,
**characterised in that**
the first processor (10) of the computer system (5) has at least three processor cores (11, 12, 13), of which
- a selected first processor core (11) is being operated with a secure operating system (SOS), that is to say an operating system which achieves or exceeds a specified security level, and is executing a first application program (APP1) securely, that is to say achieving the specified security level,
- a selected second processor core (12) is being operated with that secure operating system or another secure operating system and is executing a second application program (APP2) securely, and
- a selected third processor core (13) is switched off, the second processor (20) of the computer system (5) also has at least three processor cores (14, 15, 16), hereinafter referred to as fourth, fifth and sixth processor core, of which
- the fourth processor core (14) is being operated with the same secure operating system (SOS) as the second processor core (12) and is executing the second application program (APP2) securely,
- the fifth processor core (15) is being operated with the same secure operating system (SOS) as the first processor core (11) and is executing the first application program (APP1) securely,
- the sixth processor core (16) is being operated with a non-secure operating system (OS), that is to say an operating system which does not achieve the specified security level, and is executing a third application program (APP3) non-securely, that is to say falling short of the specified security level,
- relative to the processor structure, the fourth processor core (14) is a different processor core from the second processor core (12) in the first processor (10) and is located elsewhere within the second processor (20) from the second processor core (12) in the first processor (10),
- relative to the processor structure, the fifth processor core (15) is a different processor core from the first processor core (11) in the first processor (10) and is located elsewhere within the second processor (20) from the first processor core (11) in the first processor (10).

13. Computer system (5) according to one of the preceding claims 10 to 12,
**characterised in that**
- at least one processor core of the first processor (10) is switched off and at least one processor core of the first processor (10) is being operated, wherein all the operated processor cores of the first processor (10) are only operated securely,
- each operated processor core of the first processor (10) is in each case assigned precisely one processor core of the second processor (20) which is operated identically, that is to say operates with the same secure operating system (SOS) as the assigned processor core of the first processor (10) and executes the same application program or the same application programs (APP1, APP2) as the assigned processor core of the first processor (10),
- at least one processor core in the second processor (20) is operated with a non-secure operating system (OS), that is to say an operating system which does not achieve the specified security level, and executes at least one application program (APP3) non-securely, that is to say falling short of the specified security level, and
- relative to the processor structure, the securely operated processor cores of the second processor (20) are spatially located elsewhere within the second processor (20) from the assigned processor cores in the first processor (10).

14. Component for a technical system,
**characterised in that**
the component is equipped with a computer system (5) according to one of the preceding claims 10 to 11.

15. Component according to claim 14,
**characterised in that**
- the component is a vehicle-side component, in particular a control device (310a) of a vehicle, preferably of a rail vehicle (310), or
- the component is a trackside component, in particular a control centre computer of a control centre of a railway track system (300) or a signal box computer of a signal box (320) of a railway track system (300).

## Revendications

1. Procédé pour faire fonctionner un système (5) informatique, qui a au moins deux processeurs (10, 20) fonctionnant en parallèle, **caractérisé en ce que**
- un premier et un deuxième processeur (10, 20) du système (5) informatique sont de même construction et ont chacun au moins deux noyaux de processeur et
- un noyau de processeur du premier processeur (10) et un noyau de processeur du deuxième processeur (20) sont mis en fonctionnement chacun d'une manière sécurisée, donc sur la base d'un système (SOS) de fonctionnement sécurisé, qui atteint ou dépasse un niveau de sécurité donné à l'avance, et exécutent respectivement au moins un programme (APP1, APP2) d'application d'une manière sécurisée, donc en atteignant un niveau de sécurité donné à l'avance,
- dans lequel ledit noyau de processeur du premier processeur (10) et ledit noyau de processeur du deuxième processeur (20) exécutent chacun le même programme d'application ou les mêmes programmes (APP1, APP2) d'application,
- dans lequel les autres noyaux de processeur du premier processeur (10) ou bien sont mis hors circuit ou sont mis également en fonctionnement d'une manière sécurisée, que ce soit sur la base dudit système (SOS) de fonctionnement sécurisé ou d'un ou de plusieurs autres systèmes de fonctionnement sécurisés et en exécutant d'une manière sécurisée les mêmes programmes d'application et/ou d'autres programmes d'application,
- dans lequel on fait fonctionner dans le deuxième processeur (20) au moins un noyau de processeur, donc sur la base d'un système (OS) de fonctionnement non sécurisé, qui n'atteint pas le niveau de sécurité donné, et exécute au moins un programme (APP3) d'application non sécurisé, n'atteignant donc pas le niveau de sécurité donné à l'avance.

2. Procédé suivant la revendication 1,
**caractérisé en ce que**
l'on compare les contenus de mémoire desdits deux noyaux de processeur fonctionnant de la même façon et on déduit un effet en retour défectueux du noyau, fonctionnant d'une manière non sécurisée, du deuxième processeur (20) sur le noyau de processeur du deuxième processeur (20) fonctionnant d'une manière sécurisée, si les contenus de mémoire s'écartent l'un de l'autre ou s'écartent l'un de l'autre au-delà d'une mesure donnée à l'avance en tout ou en partie, notamment au vu des données de fonctionnement du programme d'application sécurisé pour les deux noyaux de processeur fonctionnant d'une manière sécurisée.

3. Procédé suivant l'une des revendications précédentes,
**caractérisé en ce que**
le premier processeur (10) du système (5) informatique a au moins trois noyaux (11, 12, 13) de processeur, dont
- un premier noyau (11) de processeur sélectionné est mis en fonctionnement par un système (SOS) de fonctionnement sécurisé, donc un système tel qu'il atteint ou dépasse un niveau de sécurité donné à l'avance, et exécute un premier programme (APP1) d'application d'une manière sécurisée, donc en atteignant le niveau de sécurité donné à l'avance,
- un deuxième noyau (12) de processeur sélectionné est mis en fonctionnement par le ou par un autre système (SOS) de fonctionnement sécurisé et exécute d'une manière sécurisée un deuxième programme (APP2) d'application, et
- un troisième noyau (13) de processeur sélectionné est mis hors circuit,
- le deuxième processeur (20) a également trois noyaux (14, 15, 16) de processeur désignés dans ce qui suit quatrième, cinquième et sixième noyau de processeur, dont
- le quatrième noyau (14) de processeur est mis en fonctionnement par le même système (SOS) de fonctionnement sécurisé que le deuxième noyau (12) de processeur et exécute d'une manière sécurisée le deuxième programme (APP2) d'application,
- le cinquième noyau (15) de processeur est mis en fonctionnement avec le même système (SOS) de fonctionnement sécurisé que le premier noyau (11) de processeur et exécute le premier programme (APP1) d'application, et
- le sixième noyau (16) de processeur est mis en fonctionnement par un système de fonctionnement non sécurisé, donc un système tel qu'il n'atteint pas le niveau de sécurité donné à l'avance et exécute un troisième programme (APP3) d'application d'une manière non sécurisée, donc en-dessous du niveau de sécurité donné à l'avance.

4. Procédé suivant la revendication 3,
**caractérisé en ce que**
- le cinquième noyau (15) de processeur est, rapporté à la structure de processeur, un noyau autre de processeur que le premier noyau (11) de processeur dans le premier processeur (10) et se trouve à un endroit au sein du deuxième processeur (20) autre que le premier noyau (11) de processeur dans le premier processeur (10) et
- le quatrième noyau (14) de processeur est, rapporté à la structure de processeur, un noyau de processeur autre que le deuxième noyau (12) de processeur dans le premier processeur (11) et est à un endroit au sein du deuxième processeur (20) autre que le deuxième noyau (12) de processeur dans le premier processeur.

5. Procédé suivant l'une des revendications précédentes,
**caractérisé en ce que**
l'on compare les résultats de travail du ou des programmes (APP1, APP2) d'application fonctionnant d'une manière sécurisée du premier processeur (10) aux résultats de travail du ou des programmes (APP1, APP2) d'application correspondants fonctionnant d'une manière sécurisée du deuxième processeur (20), et on produit un signal d'alerte, si les résultats de travail s'écartent les uns des autres ou s'écartent les uns des autres dans une mesure donnée à l'avance.

6. Procédé suivant l'une des revendications précédentes,
**caractérisé en ce que**
l'on compare entre eux les contenus de mémoire du premier (11) et du cinquième noyau (15) de processeur et les contenus de mémoire du deuxième (12) et du quatrième noyau (14) de processeur, et on déduit un effet de retour défectueux du noyau (16) de processeur, fonctionnant d'une manière non sécurisée, du deuxième processeur (20) sur les noyaux (14, 15) de processeur du deuxième processeur (20) fonctionnant d'une manière sécurisée, si les contenus de mémoire s'écartent l'un de l'autre ou s'écartent l'un de l'autre au-delà d'une mesure donnée à l'avance en tout ou en partie, notamment au vu des données de fonctionnement des programmes (APP1, APP2) d'application sécurisés.

7. Procédé suivant l'une des revendications précédentes,
**caractérisé en ce que**
- au moins un noyau de processeur du premier processeur (10) est mis hors circuit et au moins un noyau de processeur du premier processeur (10) est mis en fonctionnement, dans lequel tous les noyaux de processeur mis en fonctionnement du premier processeur (10) sont mis en fonctionnement exclusivement d'une manière sécurisée,
- à chaque noyau de processeur mis en fonctionnement du premier processeur (10) est associé respectivement exactement un noyau de processeur du deuxième processeur (20), qui travaille avec le même système (SOS) de fonctionnement sécurisé que le noyau de processeur associé du premier processeur (10) et qui exécute le même ou les mêmes programmes d'application que le noyau de processeur associé du premier processeur (10), et
- au moins un noyau de processeur dans le deuxième processeur (20) est mis en fonctionnement par un système (OS) de fonctionnement non sécurisé, donc un système tel qu'il n'atteint pas le niveau de sécurité donné à l'avance, et exécute un programme d'application d'une manière non sécurisée, donc en-dessous du niveau de sécurité donné à l'avance.

8. Procédé suivant l'une des revendications précédentes,
**caractérisé en ce que**
les noyaux de processeur fonctionnant d'une manière sécurisée du deuxième processeur (20) - rapportés à la structure de processeur - sont dans l'espace dans un endroit dans le deuxième processeur (20) autre que les noyaux de processeur associés dans le premier processeur (10).

9. Procédé suivant l'une des revendications précédentes,
**caractérisé en ce que**
on fait fonctionner avec le système (5) informatique un composant d'une installation technique, notamment un composant embarqué d'un véhicule (310) ferroviaire ou un composant sur la voie, notamment un poste de conduite ou un aiguillage (320).

10. Système (5) informatique comprenant au moins deux processeurs (10, 20) fonctionnant en parallèle,
**caractérisé en ce que**
- un premier (10) et un deuxième processeur (20) du système (5) informatique sont de même construction et ont chacun au moins deux noyaux de processeur et
- un noyau de processeur du premier processeur (10) et un noyau de processeur du deuxième processeur (20) sont mis en fonctionnement chacun d'une manière sécurisée, donc sur la base d'un système (SOS) de fonctionnement sécurisé, qui atteint ou dépasse un niveau de sécurité donné à l'avance, et exécutent respectivement au moins un programme (APP1, APP2) d'application d'une manière sécurisée, donc en atteignant le niveau de sécurité donné à l'avance,
- dans lequel ledit noyau de processeur du premier processeur (10) et ledit noyau de processeur du deuxième processeur (20) exécutent chacun le même programme d'application ou les mêmes programmes (APP1, APP2) d'application,
- dans lequel les autres noyaux de processeur du premier processeur (10) ou bien sont mis hors circuit ou sont mis également en fonctionnement d'une manière sécurisée, que ce soit sur la base dudit système (SOS) de fonctionnement sécurisé ou d'un ou de plusieurs autres systèmes de fonctionnement sécurisés et en exécutant d'une manière sécurisée les mêmes programmes d'application et/ou d'autres programmes d'application,
- dans lequel on fait fonctionner dans le deuxième processeur (20) au moins un noyau de processeur, donc sur la base d'un système (OS) de fonctionnement non sécurisé, qui n'atteint pas le niveau de sécurité donné, et exécute au moins un programme (APP3) d'application non sécurisé, n'atteignant donc pas le niveau de sécurité donné à l'avance.

11. Système (5) informatique suivant la revendication 10,
**caractérisé en ce que**
le système (5) informatique a un dispositif de comparaison, qui compare entre eux les contenus de mémoire desdits deux noyaux de processeur fonctionnant de la même façon et on déduit un effet en retour défectueux du noyau de processeur, fonctionnant de manière non sécurisée, sur le noyau de processeur du deuxième processeur (20) fonctionne d'une manière sécurisée, si les contenus de mémoire s'écartent l'un de l'autre ou s'écartent l'un de l'autre au-delà d'une mesure donnée à l'avance en tout ou en partie, notamment au vu des données de fonctionnement du programme d'application sécurisé pour les deux noyaux de processeur fonctionnant d'une manière sécurisée.

12. Système (5) informatique suivant l'une des revendications 10 à 11,
**caractérisé en ce que**
le premier processeur (10) du système (5) informatique a au moins trois noyaux (11, 12, 13) de processeur, dont
- un premier noyau (11) de processeur sélectionné est mis en fonctionnement par un système (SOS) de fonctionnement sécurisé, donc un système tel qu'il atteint ou dépasse un niveau de sécurité donné à l'avance, et exécute un premier programme (APP1) d'application d'une manière sécurisée, donc en atteignant le niveau de sécurité donné à l'avance,
- un deuxième noyau (12) de processeur sélectionné est mis en fonctionnement par le ou par un autre système (SOS) de fonctionnement sécurisé et exécute d'une manière sécurisée un deuxième programme (APP2) d'application, et
- un troisième noyau (13) de processeur sélectionné est mis hors circuit,
le deuxième processeur (20) du système (5) informatique a également trois noyaux (14, 15, 16) de processeur, désignés dans ce qui suit quatrième, cinquième et sixième noyau de processeur, dont
- le quatrième noyau (14) de processeur est mis en fonctionnement par le même système (SOS) de fonctionnement sécurisé que le deuxième noyau (12) de processeur et exécute d'une manière sécurisée le deuxième programme (APP2) d'application,
- le cinquième noyau (15) de processeur est mis en fonctionnement par le même système (SOS) de fonctionnement sécurisé que le premier noyau (11) de processeur et exécute le premier programme (APP1) d'application, et
- le sixième noyau (16) de processeur est mis en fonctionnement par un système (OS) de fonctionnement non sécurisé, donc un système tel qu'il n'atteint pas le niveau de sécurité donné à l'avance, et exécute un troisième programme (APP3) d'application d'une manière non sécurisée, donc en-dessous du niveau de sécurité donné à l'avance,
- le quatrième noyau (14) de processeur est, rapporté à la structure de processeur, un noyau de processeur autre que le deuxième noyau (12) de processeur dans le premier processeur (10) et est à un endroit au sein du deuxième processeur (20) autre que le deuxième noyau (12) de processeur dans le premier processeur (10),
- le cinquième noyau (15) de processeur est, rapporté à la structure de processeur, un noyau de processeur autre que le premier noyau (11) de processeur dans le premier processeur (10) et est à un endroit au sein du deuxième processeur (20) autre que le premier noyau (11) de processeur dans le premier processeur (10).

13. Système (5) informatique suivant l'une des revendications 10 à 12 précédentes,
**caractérisé en ce que**
- au moins un noyau de processeur du premier processeur (10) est mis hors circuit et au moins un noyau de processeur du premier processeur (10) est mis en fonctionnement, dans lequel tous les noyaux de processeur mis en fonctionnement du premier processeur (10) sont mis en fonctionnement exclusivement d'une manière sécurisée,
- à chaque noyau de processeur mis en fonctionnement du premier processeur (10) est associé respectivement exactement un noyau de processeur du deuxième processeur (20), qui est mis en fonctionnement de la même façon, qui travaille donc avec le même système (SOS) de fonctionnement sécurisé que le noyau de processeur associé du premier processeur (10), et qui exécute le même ou les mêmes programmes (APP1, APP2) d'application que le noyau de processeur associé du premier processeur (10), et
- au moins un noyau de processeur dans le deuxième processeur (20) est mis en fonctionnement par un système (OS) de fonctionnement non sécurisé, donc un système tel qu'il n'atteint pas le niveau de sécurité donné à l'avance, et exécute un programme (APP3) d'application d'une manière non sécurisée, donc en-dessous du niveau de sécurité donné à l'avance, et
- les noyaux de processeur fonctionnant d'une manière sécurisée du deuxième processeur (20) sont - rapportés à la structure de processeur - dans l'espace à un endroit au sein du deuxième processeur autre que les noyaux de processeur associés dans le premier processeur (10).

14. Composant d'une installation technique,
**caractérisé en ce que**
le composant est équipé d'un système (5) informatique suivant l'une des revendications 10 à 11 précédentes.

15. Composant suivant la revendication 14,
**caractérisé en ce que**
- le composant est un composant embarqué, notamment un appareil (310a) de commande d'un véhicule, de préférence d'un véhicule (310) ferroviaire, ou
- le composant est un composant sur la voie, notamment un ordinateur de poste de conduite d'une centrale de conduite d'une installation (300) de voies ferrées ou un ordinateur d'aiguillage d'un aiguillage (320) d'une installation (300) de voies ferrées.
